# NEUE EUROPÄISCHE PATENTSCHRIFT

(11) **EP 0 239 850 B2**
(45) Veröffentlichungstag und Bekanntmachung des Hinweises auf die Entscheidung über den Einspruch: **27.11.1996**
(45) Hinweis auf die Patenterteilung: 20.06.1990
(21) Anmeldenummer: 87103656.2
(22) Anmeldetag: 13.03.1987
(51) Int. Cl.: C09D 133/26, C08L 33/26

(54) **Verfahren zur einschichtigen Beschichtung von Finish-Folien und Endloskanten**
Process for the single coating of finishing foils and endless borders
Procédé pour le revêtement en une seule couche de feuilles pour couche de fixation et bordure sans fin

(30) Priorität: 29.03.1986 DE 3610732
(43) Veröffentlichungstag der Anmeldung: 07.10.1987
(73) Patentinhaber: BASF Lacke + Farben AG, 48165 Münster-Hiltrup (DE)
(72) Erfinder: Dickerhof, Karlheinz, Dr., D-4406 Drensteinfurt (DE); Schwarz, Günther, Dr., D-4400 Münster (DE)
(74) Vertreter: Münch, Volker, Dr.

(56) Entgegenhaltungen:
- GB-A- 1 178 903
- JP-A-51 036 235
- US-A- 4 303 581
- Paints & Resins, Vol. 53, no. 6, December 1983, Seiten 34-37, 49

## Beschreibung

Die Erfindung betrifft ein Verfahren zur einschichtigen Beschichtung von Finish-Folien und Endloskanten.

Imprägnierte Papiere, die auf Platten verpreßt eine Vorbearbeitung im Sinne einer Grundierung darstellen (Grundierfolie) oder häufig auch eine dekorative Wirkung entfalten (Dekorfolie), sind in der Möbel- und Plattenindustrie seit langem bewährt. Die Verknappung und Verteuerung echter Funiere hat zu einem verstärkten Einsatz letzterer Folien ganz wesentlich beigetragen. Die Folien müssen nach dem Verpressen auf Span- oder Holzfaserhartplatten nachlackiert werden, da sonst der Oberflächeneffekt nicht ausreichend ist.

Im Zug der Vereinfachung des Produktionsablaufs setzt sich eine verbesserte Art imprägnierter Papiere, die Fertigfolie, mehr und mehr durch. Hierbei handelt es sich um imprägnierte unifarbige oder bedruckte Papierfolien, die im Anschluß an die Imprägnierung schon beim Folienhersteller mit einem Lackanstrich versehen werden.

Die so erhaltenen Finish-Folien und Endloskanten (zur kontinuierlichen Kantenbeschichtung) werden als Rollenware an die Möbel- und Plattenindustrie geliefert, wo sie unter Druck- und Hitzeeinwirkung mit Substraten, wie z.B. Span- oder Hartfaserplatten verleimt werden. Auf diese Weise werden Flächen erhalten, die in der Regel keiner weiteren Lackierung mehr bedürfen, also "preßfallend" weiterverarbeitet werden können.

Die zur Lackierung der in Rede stehenden Finish-Folien bzw. Endloskanten verwendeten Lacke und die aus den Lacken hergestellten Beschichtungen müssen hohen Anforderungen gerecht werden.

So sollen sowohl bei der Beschichtung von Finish-Folien und Endloskanten als auch bei der Weiterverarbeitung der beschichteten Folien bzw. Kanten keine oder nur geringe Mengen an organischen Lösungsmitteln und/oder Formaldehyd emittiert werden.

Außerdem ist es erwünscht, daß sich die lackierten aber noch nicht verpreßten Folien nicht krümmen oder gar einrollen.

Besonders wichtig ist, daß die zur Beschichtung der Finish-Folien und Endloskanten verwendeten Lacke nach einer unter 60 Sekunden, in der Regel 10 bis 20 Sekunden dauernden Wärmebehandlung bei 140 bis 210°C soweit ausgehärtet sind, daß sie die bei der Herstellung der Platten bzw. Möbelteile angewandten Preßbedingungen (z.B. 5 bis 30 Sekunden bei 150 bis 180°C und 5 bis 20 kp/cm²; verschärfte Preßbedingungen: bis 180 Sekunden bei 170-180°C und bis zu 30 kp/cm²) ohne Blockeigenschaften und Verfärbungen zu zeigen unbeschadet überstehen. Die so erhaltenen Oberflächen sollen eine möglichst hohe Kratzfestigkeit aufweisen und die in der DIN-Norm 68861 Gruppe A geforderten Resistenzwerte möglichst erreichen.

In Gruppe A der DIN 68861 werden folgende Anforderungen an die zu prüfenden Oberflächen gestellt:

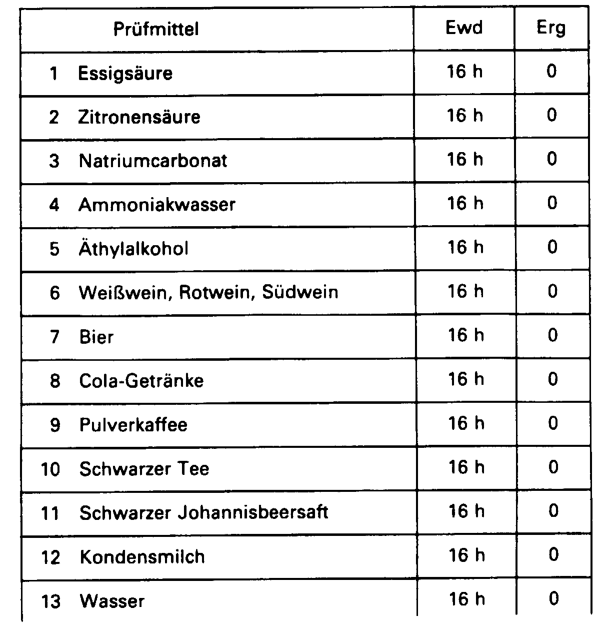

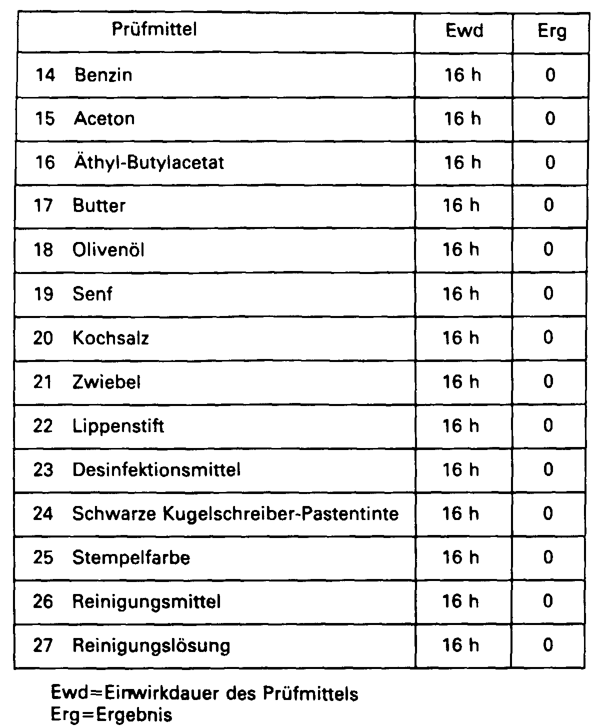

### Beschreibung der Ergebnisse

Aus der vergleichenden Betrachtung der geprüften und ungeprüften Fläche ist das Ergebnis der Prüfung nach folgender Bewertungsskala anzugeben:
0 Keine sichtbaren Veränderungen
1 Eben erkennbare Änderungen in Glanz oder Farbe
2 Leichte Veränderungen in Glanz oder Farbe; die Struktur der Prüffläche ist nicht verändert
3 Starke Markierungen sichtbar; die Struktur der Prüffläche ist jedoch weitgehend unbeschädigt
4 Starke Markierungen sichtbar; die Struktur der Prüffläche ist verändert
5 Prüffläche stark verändert bzw. zerstört.

Die oben erwähnten Forderungen nach einer geringen Lösungsmittelemission kann nur von wäßrigen Lacksystemen erfüllt werden.

Zur Herstellung von Oberflächen, die eine hohe Kratzfestigkeit aufweisen und die die in der DIN Norm 68861 Gruppe A geforderten Resistenzwerte möglichst erreichen, wurden bisher Lacke verwendet, die entweder Melamin- und/oder Harnstoffharze oder Polyacrylate als Hauptbindemittel enthalten.

Die Lacke auf Basis von Melamin- und/oder Harnstoffharzen werden nachteiligerweise von Wasser und wäßrigen Lösungen leicht angequollen und sie zeigen sowohl bei der Verarbeitung als auch danach eine relativ hohe Formaldehydemission und die mit diesen Lacken lackierten Folien zeigen ein starkes Krümmen bzw. Einrollverhalten.

Die bisher bekannten Lacke auf Basis von Polyacrylaten zeigen schlechte Kratzfestigkeit und schlechte Lösungsmittelbeständigkeiten (insbesondere gegen Aceton).

Der Erfindung liegt die Aufgabe zugrunde, ein neues Verfahren zur einschichtigen Beschichtung von Finish-Folien und Endloskanten zur Verfügung zu stellen. Die nach dem neuen Verfahren hergestellten Lackschichten sollen nach einer oder 60 Sekunden, in der Regel 10 bis 20 Sekunden dauernden Wärmebehandlung bei 140 bis 210 °C soweit ausgehärtet sein, daß sie die bei der Herstellung der Platten bzw. Möbelteile angewandten Preßbedingungen - insbesondere die im steigendem Maße angewandten verschärften Preßbedingungen - ohne Blockeigenschaften und Verfärbungen zu zeigen, unbeschadet überstehen. Die so erhaltenen Oberflächen sollen eine möglichst hohe Kratzfestigkeit aufweisen und die in der DIN Norm 68861 Gruppe A geforderten Resistenzwerte möglichst weitgehend erreichen.

Das neue Verfahren soll weiterhin gewährleisten, daß sowohl während der Beschichtung der Folien bzw. Endloskanten als auch bei der Weiterverarbeitung der beschichteten Folien bzw. Endloskanten möglichst wenig Formaldehyd emittiert wird.

Schließlich soll nach der Applikation kein Krümmen oder gar Einrollen der Folien auftreten.

In "Thermosetting Acrylic Emulsions" (Talak, Pontis, Paint & Resin 1983, Volume 53, Nr. 6, 34 ff) (1) werden unpigmentierte einkomponentige Überzugszusammensetzungen beschrieben, die im wesentlichen aus wäßrigen Emulsionen carboxyl-, hydroxyl- und methylolamidgruppenhaltiger Polyacrylate, Hexamethoxymethylmelamin, dem Ammoniumsalz der p-Toluolsulfonsäure als geblocktem Härtungskatalysator und Butylcellosolve bestehen.

Die in (1) offenbarten wäßrigen Beschichtungszusammensetzungen sollen für eine ganze Reihe von Anwendungsgebieten - unter anderem auch zum Beschichten von Papier - geeignet sein.

Versuche, die in (1) offenbarten Beschichtungszusammensetzungen unter den oben beschriebenen Bedingungen zur Beschichtung von Finish-Folien und Endloskanten einzusetzen, führten nur zu unbefriedigenden Resultaten.

Nach dem Verpressen der mit den in (1) offenbarten Lacken lackierten Folien wurden Oberflächen erhalten, die vor allem bei der Prüfung mit Rotwein, Pulverkaffee und schwarzem Tee sehr schlechte Prüfergebnisse erhielten (vergleiche auch Ausführungen zur DIN 68861 Gruppe A).

In der DE-OS 2 135 072 wird ein Verfahren zur Herstellung hochglänzender Oberflächen von Dekorpapieren empfohlen, bei dem man ein Dekorrohpapier mit einer füllstofffreien Mischung aus einer thermoplastischen und einer selbstvernetzenden, wäßrigen Dispersion auf Acrylatbasis, die auch ein wasserlösliches Melamin-Formaldehyd oder Harnstoff-Formaldehydharz enthalten kann, tränkt oder beschichtet, anschließend trocknet und mit einer hochglanzpolierten Walze bei einer Temperatur zwischen 120 und 180 °C kalandriert.

Versuche, die in der DE 21 35 072 offenbarten Beschichtungszusammensetzungen unter den oben beschriebenen Bedingungen zur Beschichtung von Finish-Folien und Endloskanten zu verwenden, führten nur zu unbefriedigenden Resultaten: Die erhaltenen Oberflächen zeigen schlechte Kratzeigenschaften und bleiben beim Verpressen am Preßblech bzw. Mylarband haften.

In der JP-A-5 136 235 wird ein Anstrichverfahren beschrieben, bei dem ein Anstrichmittel, das ein in Wasser dispergierbares Vinylcopolymer und ein wasserlösliches Aminoharz enthält, auf ein Substrat aufgebracht und mit fernen Infrarotstrahlen getrocknet wird.

Die der vorliegenden Erfindung zugrundeliegende Aufgabe konnte überrachenderweise durch Bereitstellung eines Verfahrens zur einschichtigen Beschichtung von Finish-Folien und Endloskanten gelöst werden, bei dem die Finish-Folien bzw. Endloskanten mit einem aus den Komponenten (A) und (B) bestehenden, übliche Additive enthaltenden Zweikomponentenklarlack beschichtet und der Naßfilm anschließend 10 bis 55, vorzugsweise 10 bis 20 sec. bei 140 bis 210°C ausgehärtet wird und das dadurch gekennzeichnet ist, daß als Zweikomponentenklarlack ein Lack verwendet wird, dessen erste Komponente (Komponente (A) 0,1 bis 15 Gew.-%, vorzugsweise 2 bis 10 Gew.-%, bezogen auf das Gesamtgewicht der Komponente (A) einer geblockten Säure als potentiellen Härtungskatalysator und 50 bis 95 Gew.-%, vorzugsweise 75 bis 85 Gew.-%, bezogen auf das Gesamtgewicht der Komponente (A) einer wäßrigen Dispersion eines selbstvernetztenden Polyacrylatharzes enthält, wobei als geblockte Säure ein durch Umsetzung einer Säure mit 2-Dimethylamino-2-methylpropanol, 2-Amino-2-hydroxymethylpropandiol-1,3, 2-Amino-2-ethylpropandiol-1,3 und/oder 2-Amino-2-methylpropanol hergestelltes Säuresalz eingesetzt wird und das Polyacrylatharz als die die Selbstvernetzung ermöglichenden Gruppen Säureamidderivatgruppen enthält, die der allgemeinen Strukturformel -CO-N(R¹)-CH(R²)-OR³ entsprechen, wobei R¹ = H-Atom oder eine -CH(R²)-OR³ Gruppierung R² = H-Atom oder eine -COOR⁴ Gruppe R³ = H-Atom oder ein 1 bis 10 C-Atome enthaltender Kohlenwasserstoffrest, bevorzugt Methyl-, Ethyl-, (iso)Propyl- oder (iso)Butylrest R⁴ = Alkylrest mit 1 bis 5 C-Atomen und daß dessen zweite Komponente (Komponente (B)) 20 bis 98 Gew.-%, vorzugsweise 70 bis 95 Gew.-%, bezogen auf das Gesamtgewicht der Komponente (B) eines in einem wäßrigen Medium dispergierten oder gelösten Melaminharzes oder eines in einem wäßrigen Medium dispergierten oder gelösten Melamin-/Harnstoff-harzgemisches enthält und daß dessen Komponenten vor der Applikation in einem solchen Verhältnis gemischt werden, daß auf ein Gewichtsteil selbstvernetzendes Polyacrylatharz 0,35 bis 0,75, bevorzugt 0,4 bis 0,6 Gewichtsteile Melaminharz oder 0,3 bis 1,5, bevorzugt 0,8 bis 1,2 Gewichtsteile Melamin-/Harnstoffharzgemisch kommen.

Im folgenden sollen das erfindungsgemäß Verfahren und vorteilhafte Ausgestaltungen des erfindungsgemäßen Verfahrens näher erläutert werden.

Unter wäßrigem Lack ist ein Lack zu verstehen, dessen flüssige Verdünnungsmittel mindestens zu 95 Gew.-%, bevorzugt 98 bis 100 Gew.-%, bezogen auf die Summe aller flüssigen Verdünnungsmittel, aus Wasser bestehen. Daneben kann der Lack auch noch organische Lösungsmittel, wie z.B. heterocyclische oder aliphatische Kohlenwasserstoffe, ein- oder mehrwertige Alkohole, Ether, Ester und Ketone, wie z.B. N-Methylpyrrolidon, Butanol, Isopropanol, Ethanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron, Propylenglykol oder Mischungen davon enthalten.

Als Beispiele für übliche Additive die in den Komponenten der erfindungsgemäß eingesetzten Lacke enthalten sein können, seien beispielhaft genannt: Mattierungsmittel (Kieselsäurederivate, Wachse...), Verlaufs- und Benetzungsmittel (Natriumsalze von Polyacrylaten...), Emulgatoren (ethoxylierte Alkylphenole, ethoxylierte Fettsäuren...), Entschäumer, Weichmacher (ethoxyliertes Glycerin...) und Wachse.

Die erfindungsgemäß eingesetzten Lacke sind Zweikomponentensysteme, bestehend aus der Komponente (A) und (B). Getrennt sind die beiden Komponenten über sehr lange Zeit lagerstabil.

Vor der Applikation werden die beiden Komponenten (A) und (B) gemischt und es wird ein Gemisch erhalten, dessen Topfzeit bei Raumtemperatur entscheidend vom Verhältnis, in dem die Komponenten (A) und (B) gemischt worden sind, abhängt.

Die Arbeitsweise in der Möbel- bzw. Plattenindustrie erfordert es, daß die Topfzeiten der aus den Komponenten (A) und (B) bestehenden Gemische über 24 Stunden liegen.

Mit (B) Komponenten, die Melamin-/Harnstoffharzgemisch als Bindemittel enthalten, werden längere Topfzeiten erreicht als mit vergleichbaren (B)-Komponenten, die reine Melaminharze als Bindemittel enthalten. Je höher der Harnstoffharzgehalt in der (B) Komponente ist, desto länger wird die Topfzeit und desto geringer wird die Reaktivität der (B)-Komponente.

Beim Einsatz von Melamin-/Harnstoffharzgemischen ist also darauf zu achten, daß die Reaktivität der Komponente (B) nicht so weit absinkt, daß das Lacksystem unter den oben beschriebenen Applikationsbedingungen nicht mehr ausreichend aushärtet. Der optimale Harnstoffharzgehalt kann vom Durchschnittsfachmann mit einfachen Mitteln bestimmt werden.

Geeignete Melamin-/Harnstoffharzgemische enthalten 1 Gwichtsteil Harnstoffharz und 1-10 Gewichtsteile Melaminharz.

Gute Beschichtungsergebnisse und Topfzeiten (Topfzeiten bei Raumtemperatur von 1 bis zu 20 Tagen) können erreicht werden, wenn die Komponenten (A) und (B) in einem solchen Verhältnis gemischt werden, daß auf ein Gewichtsteil selbstvernetzendes Polyacrylatharz 0,35 bis 0,75, bevorzugt 0,4 bis 0,6 Gewichtsteile Melaminharz oder 0,3 bis 1,5, bevorzugt 0,8 bis 1,2 Gewichtsteile Melamin-/ Harnstoffharzgemisch kommen.

Sobald das Gemisch aus den Komponenten (A) und (B) appliziert worden ist und auf eine Temperatur von 140 bis 210°C gebracht worden ist, härtet es innerhalb von 10 bis 55 Sekunden, in der Regel innerhalb von 10 bis 20 Sekunden ohne Blasenbildung soweit aus, daß die dabei entstandenen Lackflächen die weiteren Verfahrensschritte-insbesondere die in steigendem Maße angewandten verschärften Preßhedingungen-ohne Blockeigenschaften oder Verfärbungen zu zeigen, schadlos überstehen.

Ein Vorteil des erfindungsgemäßen Verfahrens liegt darin, daß die Oberflächen auch nach Anwendung von verschärften Preßbedingungen noch gute Eigenschaften zeigen.

So zeigen die nach dem erfindungsgemäßen Verfahren hergestellten Oberflächen insbesondere hohe Kratzfestigkeitswerte, gute Lösungsmittelresistenz (insbesondere gute Resistenzwerte gegenüber Aceton) und sehr geringe Formaldehydemissionswerte ( 0,1 ppm nach der WKI-Methode (vgl. DIN 52368).

Weiter erfüllen die nach dem erfindungsgemäßen Verfahren hergestellten Beschichtungen nahezu alle der in der oben aufgeführten Gruppe A der DIN Norm 68861 aufgestellten Forderungen. Besonders sei hervorgehoben, daß die nach dem erfindungsgemäßen Verfahren hergestellten Oberflächen bei den Tests kein bzw. nur ein sehr geringes Quellverhalten zeigen und daß sie eine besonders gute Resistenz gegen Pulverkaffee aufweisen.

Weiter haben die nach dem erfindungsgemäßen Verfahren beschichteten Folien den Vorteil, daß sie sich kaum krümmen und nicht einrollen.

Die Komponente (A) enthält neben üblichen Additiven 0,1 bis 15 Gew.-%, vorzugsweise 2 bis 10 Gew.-% einer geblockten Säure und 50 bis 95 Gew.-%, vorzugsweise 75 bis 85 Gew.-% einer selbstvernetzenden wäßrigen Polyacrylatdispersion bzw. Mischungen von selbstvernetzenden wäßrigen Polyacrylatdispersionen. Die Gewichtsprozentangaben beziehen sich auf das Gesamtgewicht der Komponente (A).
Unter einer geblockten Säure ist ein Säuresalz zu verstehen, das erst bei höheren Temperaturen in freie Säure und Base zerfällt. Die freigesetzte Säure wirkt dann als Vernetzungs- bzw. Härtungskatalysator.

Erfindungsgemäß werden als geblockte Säuren durch Umsetzung einer Säure mit 2-Dimethylamino-2-methylpropanol, 2-Amino-2-hydroxymethylpropandiol-1,3, 2-Amino-2-ethylpropandiol-1,3 und/oder 2-Amino-2-methylpropanol hergestelltes Säuresalze eingesetzt. Die geblockten Säuren werden nach gut bekannten Verfahren durch vorzugsweise in Wasser durchgeführte Umsetzungen von Säuren mit 2-Dimethylamino-2-methylpropanol, 2-Amino-2-hydroxymethylpropandiol-1,3, 2-Amino-2-ethylpropandiol-1,3 und/oder 2-Amino-2-methylpropanol hergestellt.

Als geblockte Säuren werden vorzugsweise durch Umsetzung einer Säure mit 2-Amino-2-ethylpropandiol-1,3 und/oder 2-Amino-2-methylpropanol hergestelltes Säuresalze eingesetzt."

Als Säuren können alle für den vorliegenden Zweck geigneten organischen oder anorganischen Säuren, wie z.B. Salzsäure, Phosphorsäure oder p-Toluolsufonsäure verwendet werden, wobei p-Toluolsufonsäure bevorzugt eingesetzt wird.

Als selbstvernetzende wäßrige Polyacrylatdispersionen werden wäßrigen Dispersionen selbstvernetzender Polyacrylatharze verwendet, die als die die Selbstvernetzung ermöglichenden Gruppen Säureamidgruppen enthalten, die der allgemeinen Strukturformel -CO-N(R¹)CH(R²)-O-R³ entsprechen, wobei
- R¹ =: H-Atom oder eine -CH(R²)-OR³ Gruppierung
- R² =: H-Atom oder eine -COOR⁴ Gruppe
- R³ =: H-Atom oder 1 bis 10 C-Atome enthaltender Kohlenwasserstoffrest, bevorzugt Methyl-, Ethyl-, (iso)Butylrest
- R⁴ =: Alkylrest mit 1 bis 5 C-Atomen

Die -CO-N(R¹)-CH(R²)O-R³ Gruppen können sowohl über ein einpolymerisiertes Monomer als auch über eine polymeranaloge Umsetzung in die Polyacrylatmoleküle eingeführt worden sein.

Bevorzugt werden die CO-N(R¹)-CH-(R²)-O-R³-Gruppen, in denen R¹ und R² Wasserstoffatome und R³ ein Wasserstoffatom oder ein Alkylrest mit 1 bis 4 C-Atomen, bevorzugt Methyl-, Ethyl- (iso-)Propyl- oder (iso-)Butyl bedeutet.

Beschichtungen mit besonders guten Oberflächeneigenschaften werden erhalten, wenn die selbstvernetzbaren Polyacrylatharze neben den obenbeschriebenen Säureamidderivatgruppen auch noch Carboxylgruppen enthalten.

Der Carboxylgruppengehalt des selbstvernetzenden Polyacrylatharzes darf aber nicht so hoch sein, daß das Polyacrylat bei einem pH-Wert von 2 bis 10 in Lösung geht.

In den meisten Fällen genügt es, wenn der Carboxylgruppengehalt des Polyacrylats deutlich unter dem Wert liegt, der für eine Lösung des Polyacrylats in dem wäßrigen, einen pH von 2 bis 10 aufweisenden Dispergiermedium notwendig wäre.

Der Fachmann kann mit Hilfe einiger weniger orientierender Versuche feststellen, welcher Carboxylgruppengehalter für seine jeweils vorliegende Problemstellung zu wählen hat.

Das erfindungsgemäß einzusetzende Polyacrylatharz kann neben den Säureamidderivat- und Carboxylgruppen auch noch weitere funktionelle Gruppen, wie z.B. Hydroxylgruppen oder freie Amidgruppen enthalten.

Die erfindungsgemäß einsetzbaren wäßrigen Dispersionen können nach allgemeinen bekannten Methoden durch Copolymerisation von (Meth-)Acrylsäureestern, bevorzugt Methyl-, Ethyl-, Propyl- oder Butyl-(meth)acrylaten, den entsprechenden (Meth-)Acrylsäureamidderivaten und gegebenenfalls einer entsprechenden Menge an Carboxylgruppen tragenden, eine polymerisierbare Doppelbindung enthaltenden Monomeren, z.B. Fumar- oder Maleinsäure, bevorzugt (Meth)-Acrylsäure unter eventueller Mitverwendung geringerer Mengen weiterer Monomere, wie z.B. Vinylacetat, Hydroxyalkyl-(meth)-Acrylaten, (Meth-)Acrylsäureamiden usw. hergestellt werden.

Bevorzugt werden Dispersionen mit folgenden Kenndaten eingesetzt:
- Festkörper: 40 bis 60 Gewichts-%, vorzugsweise 50 Gewichts-%, bezogen auf das Gesamtgewicht der wäßrigen Polyacrylatdispersion.
- Mittlerer Teilchendurchmesser: 0,1 bis 0,5 µm, vorzugweise 0,2 bis 0,3 µm.
- Minimale Filmbildungstemperatur (MFT): 0 bis 50°C, vorzugsweise zwischen 20 und 35°C.
- Viskosität: 200 bis 5000 mPas, vorzugsweise 200 bis 1000 mPas und
- pH-Wert: 2-7, vorzugsweise 2-4.

Die Komponente (B) enthält 20 bis 98 Gew.-%, vorzugsweise 70 bis 95 Gew.-%, bezogen auf das Gesamtgewicht der Komponente (B) ein in einem wäßrigen Medium dispergiertes oder gelöstes Melaminharz oder ein in einem wäßrigen Medium dispergiertes oder gelöstes Melamin-/ Harnstoffharzgemisch.

Bei den wasserverdünnbaren Melaminharzen handelt es sich um allgemein bekannte in der Regel veretherte Melamin-Formaldehyd-Umsetzungsprodukte.

Die Wasserverdünnbarkeit der Melaminharze hängt, abgesehen vom Kondensationsgrad, der möglichst niedrig sein soll, von der Veretherungskomponente ab, wobei nur die niedrigsten Glieder der Alkanolreihe wasserlösliche Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Als Beispiele für erfindungsgemäß einsetzbare Melaminharze seien die im Handel unter dem Markennamen Cymel 300, 301, 303, Luwipal 068, 066, Beetle BE 3745 oder Maprenal MF 900, 910 erhältlichen nicht plastifizierten Hexamethoxymethylmelaminharze genannt.

Bei den Harnstoffharzen handelt es sich um allgemein bekannte wasserverdünnbare Harnstoff-Formaldehyd-Umsetzungsprodukte.

Als Beispiele für erfindungsgemäß einsetzbare Harnstoffharze seien die im Handel unter dem Markennamen Dynomin UM 15, Resamin VHW 3525 oder Plastopal erhältlichen plastifizierten bzw. nicht plastifizierten Harnstoff-Formalehyd-Umsetzungsprodukte genannt.

Das erfindungsgemäße Verfahren in auch zur Lackierung von Holzsubstraten, wie z.B. Hartfaserplatten, Spanplatten und Holzwerkstoffen, geeignet. In vielen Fällen kann es vorteilhaft sein, mit einem Primer vorzulackieren.

Die Erfindung betrifft auch ein Verfahren zur einschichtigen Beschichtung von Finish-Folien und Endloskanten, bei dem die Finish-Folien bzw. Endloskanten mit einem aus den Komponenten (A) und (B) bestehenden übliche Additive enthaltenden Zweikomponentenklarlack beschichtet und der Naßfilm anschließend 10 bis 55, vorzugsweise 10 bis 20 sec. bei 140 bis 210°C ausgehärtet wird und das dadurch gekennzeichnet ist, daß als Zweikomponentenklarlack ein Lack verwendet wird, dessen erste Komponente (Komponente (A)) 0,1 bis 15 Gew.%, vorzugsweise 2 bis 10 Gew.-% bezogen auf das Gesamtgewicht der Komponente (A) einer geblockten Säure als potentiellen Härtungskatalysator und 50 bis 95 Gew.-%, vorzugsweise 75 bis 85 Gew.-% bezogen auf das Gesamtgewicht der Komponente (A) einer wäßrigen Dispersion eines selbstvernetzenden Polyacrylatharzes enthält, wobei das Polyacrylat als die die Selbstvernetzung ermöglichenden Gruppen Säureamidderivatgruppen enthält, die der allgemeinen Strukturformel -CO-N(R¹)-CH(R²)-OR³ entsprechen, wobei
R¹ =H-Atom oder eine -CH(R²)-OR³ Gruppierung
R²=H-Atom oder eine -COOR⁴ Gruppe
R³=H-Atom oder ein 1 bis 10 C-Atome enthaltender Kohlenwasserstoffrest, bevorzugt Methyl-, Ethyl(iso)Propyl- oder (iso)Butylrest
R⁴=Alkylrest mit 1 bis 5 C-Atomen und daß dessen zweite Komponente (Komponente (B)) 20 bis 98 Gew.-%, vorzugweise 70 bis 95 Gew.-% bezogen auf das Gesamtgewicht der Komponente (B) eines in einem wäßrigen Medium dispergierten oder gelösten Melaminharzes oder eines in einem wäßrigen Medium dispergierten oder gelösten Melamin-/Harnstoffharzgemisches enthält und daß dessen Komponenten vor der Applikation in einem solchen Verhältnis gemischt werden, daß auf ein Gewichtsteil selbstvernetzendes Polyacrylatharz 0,35 bis 0,75, bevorzugt 0,4 bis 0,6 Gewichtsteile Melaminharz oder 0,3 bis 0,5, bevorzugt 0,8 bis 1,2 Gewichtsteile Melamin-/Harnstoffharzgemisch kommen.

Die Finish-Folien und Endloskanten werden mit eigens dafür entwickelten Maschinen lackiert. Als Lackauftrags- bzw. Dosiereinrichtungen stehen Rasterwalzen oder Drahtrakeln zur Verfügung. Die Lackauftragsmenge liegt üblicherweise zwischen 5 und 60 g/m² bei einer Naßfilmschichtdicke von 10 bis 80 µm. Zur Lacktrocknung werden üblicherweise Trockenkanäle mit beheizter Luft, sog. Konvektoren oder IR-Strahler oder Kombinationen aus beiden eingesetzt. Die Papierbahn wird nach der Trocknung als Rolle aufgewickelt und in dieser Form in die Möbelindustrie geliefert.

Die Erfindung wird in den folgenden Beispielen näher erläutert. Alle Angaben über Teile und Prozentsätze Sind Gewichtsangaben, falls nicht ausdrücklich etwas anderes festgestellt wird.

### Beispiels für die Komponente (A)

Alle Mengenangaben beziehen sich auf 100 Teile der Komponente (A).

### (A)-1

45 Teile einer selbstvernetzenden Methylolamidgruppen enthaltenden Acrylatdispersion mit einem Festkörper von 60 Gew.-%, einem mittleren Teilchendurchmesser von 0,3 µm, einem pH-Wert von 2-4 und einer Viskosität von 1000 bis 4000 mPas werden mit 43,5 Teilen einer Methylolamidgruppen enthaltenden selbstvernetzenden Acrylatdispersion mit einem Festkörper von 50 Gew.-%, einem mittleren Teilchendurchmesser von 0,25 µm, einer Viskosität von unter 300 mPas und einem pH-Wert von 2-4 gemischt. Zu dieser Mischung werden 3,5 Gew.-% einer Wachsmischung, die aus einem Ethylen/ Propylencopolymer und einem oxidierten Polyethylenwachs besteht, 5 Gew.-% einer amingeblockten Paratoluolsulfonsäure, 2 Gew.-% Propylenglykol und 1 Gew.-% eines Mineralöl-enthaltenden Entschäumers unter Rühren zugegeben.

Die amingeblockte Paratoluolsulfonsäure wird durch Neutralisation von 20 g Paratoluolsulfonsäure mit 10,6 g Aminomethylpropanol in Wasser hergestellt.

### (A)-2

30 Teile einer selbstvernetzenden Acrylatdispersion mit einem Festkörper von 50 Gew.-%, einem mittleren Teilchendurchmesser von 0,2 µm, einer Viskosität 300 mPas werden mit 30 Teilen einer selbstvernetzenden Acrylatdispersion mit einem Festkörper von 60 Gew.-%, einem mittleren Teilchendurchmesser von 0,3 µm, einer Viskosität 4000 mPas und weiteren 23,5 Teilen einer selbstvernetzenden Acrylatdispersion mit einem Festkörper von 50 Gew.-%, einem mittleren Teilchendurchmesser von 0,2 µm und einer Viskosität von 300 mPas unter ständigem Rühren vermischt. Alle Dispersionen enthalten Methylolamidgruppen und weisen einen pH-Wert von 2-4 auf.

Unter ständigem Rühren werden in diese Mischung 3,5 Gew.-% einer Wachsmischung, die aus einem Ethylen/Propylencopolymer und oxidiertem Polyethylenwachs besteht, 4,5 Gew.-% Siliciumdioxid als Mattierungsmittel, 5 Gew.-% des unter (A)-1 beschriebenen amingeblockten Härters, 2 Gew.-% Propylenglykol und 1 Gew.-% eines mineralölenthaltenden Entschäumers zugegeben.

### (A)-3

89 Teile einer selbstvernetzenden, Methylolgruppen enthaltenden Acrylatdispersion mit einem Festkörper von 50 Gew.-%, einem mittleren Teilchendurchmesser von 0,25 µm, einem pH-Wert von 2-4 und einer Viskosität 300 mPas werden mit 3 Gew.-% einer Wachsmischung, die aus einem Polyethylenund/oder Polypropylenwachs besteht, 5 Gew.-% des amingeblockten Härters aus Beispiel (A)-1,2 Gew.-% Propylenglykol und 1 Gew.-% eines mineralölenthaltenden Entschäumers unter Rühren versetzt.

### Beispiele für die Komponente (B)

(Alle Mengenaufgaben beziehen sich auf 100 Teile Komponente (B)).

### (B)-1

90 Teile eines Hexamethoxymethylmelaminharzes werden mit 5 Teilen eines niedrigsiedenden Alkohols und 5 Teilen Wasser unter Rühren versetzt.

### (B)-2

40 Teile eines Hexamethoxymethylmelaminharzes werden mit 8 Teilen Propylenglykol, 4 Teilen Wasser, 45 Teilen eines plastifizierten Harnstoffharzes und 3 Teilen einer Polypropylenwachsmischung unter Rühren vermischt.

### Beispiele für aus den Komponenten (A) und (B) hergestellten Lacke

Die Komopnenten (A) und (B) werden gemischt, auf Verarbeitungsviskosität eingestellt und auf ein weißes Nachimprägnat (100 g/m²) aufgetragen. Der Überzug wird dann 15 sec. bei 120°C und 180°C im Düsenkanal getrocknet und anschließend wird das beschichtete Papier normalen und verschärften Preßbedingungen unterworfen (45 sec. bei 140°C und 5 kp/cm² bzw. 90 sec. bei 175°C und 25 kp/cm²). Das Gewicht der getrockneten und verpreßten Lackschicht beträgt ca. 15 g/m² Papierfläche.

**TABELLE 1**

| | | | |
|---|---|---|---|
| (A)-1 (Gew.-%) | 90 | 80 | 70 |
| (B)-1 (Gew.-%) | 10 | 20 | 30 |
| Wasserzugabe (Gew.-%) (bezogen auf 100 Gew.-% Gemisch aus (A)+(B)) | 3 | 5 | 20 |
| Verarbeitungsviskosität | alle 20 sec. | DIN 4 | Messbecher |
| Topfzeit | >5 Tage | >5 Tage | nach wenigen Minuten zähviskos, nach 2 h fest |
| Kaffeetest (16 h) | 0 | 0 | - |
| Kratzfestigkeit | 2 | 1 | - |
| Quellung (16 h) | 0-1 | 0 | - |
| Acetonresistenz (16 h) | 0-1 | 0 | - |

Die Bewertungsskala entspricht der Bewertungsskala der DIN 68861 Gruppe A.

**TABELLE 2**

| 80 Teile | (A)-1 | (A)-2 | (A)-3 | (A)-1 |
|---|---|---|---|---|
| 20 Teile | (B)-1 | (B)-1 | (B)-1 | (B)-2 |
| Wasser (Gew.-%) bezogen auf 100 Gew.-% Gemisch aus (A)+(B)) | 3 | 5 | 15 | 5 |
| Verarbeitungsviskosität | alle 20 sec. | DIN 4 | Messbecher | |
| Topfzeit | >5 Tage | >5 Tage | >5 Tage | >>5 Tage |
| Kaffeetest (16 h) | 0 | 0 | 1 | 0-1 |
| Kratzfestigkeit | 1 | 1 | 1-2 | 2 |
| Quellung (16 h) | 0 | 0 | 0- | 0 |
| Acetonresistenz (16 h) | 0 | 0 | 0- | 0 |

## Patentansprüche

1. Verfahren zur einschichtigen Beschichtung von Finish-Folien und Endloskanten, bei dem die Finish-Folien bzw. Endloskanten mit einem aus den Komponenten (A) und (B) bestehenden, übliche Additive enthaltenden Zweikomponentenklarlack beschichtet und der Naßfilm anschließend 10 bis 55, vorzugsweise 10 bis 20 sec. bei 140 bis 210°C ausgehärtet wird, dadurch gekennzeichnet, daß als Zweikomponentenklarlack ein Lack verwendet wird, dessen erste Komponente (Komponente (A) 0,1 bis 15 Gew.-%, vorzugsweise 2 bis 10 Gew.-%, bezogen auf das Gesamtgewicht der Komponente (A) einer geblockten Säure als potentiellen Härtungskatalysator und 50 bis 95 Gew.-%, vorzugsweise 75 bis 85 Gew.-%, bezogen auf das Gesamtgewicht der Komponente (A) einer wäßrigen Dispersion eines selbstvernetztenden Polyacrylatharzes enthält, wobei als geblockte Säure ein durch Umsetzung einer Säure mit 2-Dimethylamino-2-methylpropanol, 2-Amino-2-hydroxymethylpropandiol-1,3, 2-Amino-2-ethylpropandiol-1,3 und/oder 2-Amino-2-methylpropanol hergestelltes Säuresalz eingesetzt wird und das Polyacrylatharz als die die Selbstvernetzung ermöglichenden Gruppen Säureamidderivatgruppen enthält, die der allgemeinen Strukturformel -CO-N(R¹)-CH(R²)-OR³ entsprechen, wobei
R¹ = H-Atom oder eine -CH(R²)-OR³ Gruppierung
R² = H-Atom oder eine -COOR⁴ Gruppe
R³ = H-Atom oder ein 1 bis 10 C-Atome enthaltender Kohlenwasserstoffrest, bevorzugt Methyl-, Ethyl-, (iso)Propyl- oder (iso)Butylrest
R⁴ = Alkylrest mit 1 bis 5 C-Atomen
und daß dessen zweite Komponente (Komponente (B)) 20 bis 98 Gew.-%, vorzugsweise 70 bis 95 Gew.-%, bezogen auf das Gesamtgewicht der Komponente (B) eines in einem wäßrigen Medium dispergierten oder gelösten Melaminharzes oder eines in einem wäßrigen Medium dispergierten oder gelösten Melamin-/Harnstoffharzgemisches enthält und daß dessen Komponenten vor der Applikation in einem solchen Verhältnis gemischt werden, daß auf ein Gewichtsteil selbstvernetzendes Polyacrylatharz 0,35 bis 0,75, bevorzugt 0,4 bis 0,6 Gewichtsteile Melaminharz oder 0,3 bis 1,5, bevorzugt 0,8 bis 1,2 Gewichtsteile Melamin-/Harnstoffharzgemisch kommen.

2. Verfahren nach Anspruch 1, dadurch gekennzeichnet, daß der potentielle Härtungskatalysator aus einem aus 2-Amino-2-ethylpropandiol-1,3 und/oder 2-Amino-2-methylpropanol und Säure, bevorzugt p-Toluolsulfonsäure hergestellten Salz besteht.

3. Verfahren nach Anspruch 1 oder 2, dadurch gekennzeichnet, daß die die Selbstvernetzung des Polyacrylatharzes ermöglichenden Säureamidgruppen der allgemeinen Strukturformel -CO-NH-CH₂O-R³ entsprechen, wobei R³ ein H-Atom oder ein 1 bis 10 C-Atome enthaltender Kohlenwasserstoffrest, bevorzugt Methyl-, Ethyl-, (iso)-Propyl oder (iso)Butyl bedeutet.

4. Verfahren nach einem der Ansprüche 1 bis 3, dadurch gekennzeichnet, daß das selbstvernetzende Polyacrylat neben den -CO-N(R¹)-CH(R²)-O-R³⁻Gruppen auch noch Carboxylgruppen enthält, wobei der Carboxylgruppengehalt höchstens so hoch sein darf, daß das Polyacrylat bei einem pH von 2 bis 10 nicht in Lösung geht.

## Claims

1. Process for the single-layer coating of finishing sheets and endless edges, in which the finishing sheets or endless edges are coated with a two-component clear coating composition consisting of components (A) and (B) and containing customary additives, and the wet film is then cured for 10 to 55, preferably 10 to 20 seconds at 140 to 210°C, characterized in that the two-component clear coating composition used is a coating composition in which the first component (component (A) contains 0.1 to 15 % by weight, preferably 2 to 10 % by weight, based on the total weight of component (A), of a blocked acid as potential curing catalyst and 50 to 95 % by weight, preferably 75 to 85 % by weight, based on the total weight of component (A), of an aqueous dispersion of a self-crosslinking polyacrylate resin, the blocked acid used being an acid salt prepared by reacting an acid with 2-dimethylamino-2-methylpropanol, 2-amino-2-hydroxymethylpropane-1,3-dial, 2-amino-2-ethylpropane-1,3-dial and/or 2-amino-2-methylpropanol and the polyacrylate resin containing, as the groups which facilitate self-crosslinking, acid amide derivative groups which correspond to the general structural formula -CO-N(R¹)-CH(R²)-OR³, in which
R¹ = H atom or a -CH(R²)-OR³ group
R² = H atom or a -COOR⁴ group
R³ = H atom or a hydrocarbon radical containing 1 to 10 C atoms, preferably a methyl, ethyl, (iso)propyl or (iso)butyl radical
R⁴ = alkyl radical having 1 to 5 C atoms,
and in that the second component (component (B) of said coating composition contains 20 to 98 % by weight, preferably 70 to 95 % by weight, based on the total weight of component (B), of a melamine resin dispersed or dissolved in an aqueous medium or a melamine resin/urea resin mixture dispersed or dissolved in an aqueous medium and in that the components of said coating composition are mixed before application in a ratio such that there is or are 0.35 to 0.75, preferably 0.4 to 0.6, part by weight of melamine resin or 0.3 to 0.5 [sic], preferably 0.8 to 1.2, parts by weight of a melamine resin/urea resin mixture per part by weight of self-crosslinking polyacrylate resin.

2. Process according to Claim 1, characterized in that the potential curing catalyst comprises a salt prepared from 2-amino-2-ethylpropane-1,3-diol and/or 2-amino-2-methylpropanol and acid, preferably p-toluenesulphonic acid.

3. Process according to Claim 1 to 2, characterized in that the acid amide groups facilitating the self-crosslinking of the polyacrylate resin correspond to the general structural formula -CO-NH-CH₂O-R³, in which R³ is an H atom or a hydrocarbon radical containing 1 to 10 C atoms, preferably methyl- [sic], ethyl- [sic], (iso)propyl or (iso)butyl.

4. Process according to one of Claims 1 to 3, characterized in that, in addition to the -CO-N(R¹)-CH(R²)-O-R³ groups, the self-crosslinking polyacrylate also contains carboxyl groups and the carboxyl group content may be at most so high that the polyacrylate does not go into solution at a pH of 2 to 10.

## Revendications

1. Procédé pour le revêtement en une seule couche de feuilles de finition et de bords continus, lors duquel on procède au revêtement des feuilles de finition ou des bords continus à l'aide d'une laque claire à deux composants, contenant des additifs usuels, se composant des composants (A) et (B), et lors duquel l'on procède ensuite au séchage du film humide à une température de 140 à 210°C pendant une durée de 0 à 55, de préférence de 10 à 20 secondes, caractérisé en ce que l'on utilise, en tant que laque claire à deux composants, une laque dont le premier composant (composant (A)) renferme de 0,1 à 15% en poids, de préférence, de 2 à 10% en poids, par rapport au poids total du composant (A) d'un acide bloqué en tant que catalyseur de durcissement potentiel, et de 50 à 95% en poids, de préférence de 75 à 85% en poids, par rapport au poids total du composant (A), d'une dispersion aqueuse d'une résine polyacrylate autoréticulante, utilisation étant faite, en tant qu'acide bloqué, d'un sel d'acide préparé par réaction d'un acide avec le 2-diméthylamino-2-méthylpropanol, le 2-amino-2-hydroxyméthylpropanediol-1,3, le 2-amino-2-éthylpropanediol-1,3 et/ou le 2-amino-2-méthylpropanol, la résine polyacrylate renfermant, en tant que groupes permettant l'autoréticulation, des groupes de dérivé d'amide d'acide, qui correspondent à la formule structurale générale :
-CO-N(R¹)-CH(R²)-OR³,
où :
- R¹ = atome d'hydrogène ou un groupement -CH(R²)-OR³,
- R² = atome d'hydrogène ou un groupe -COOR⁴
- R³ = atome d'hydrogène ou on reste hydrocarboné renfermant 1 à 10 atomes de carbone, de préférence, un reste méthyle, éthyle, (iso)propyl ou (iso)butyle,
- R⁴ = reste alkyle ayant 1 à 5 atomes de carbone, et dont le second composant (composant (B)) renferme de 20 à 98% en poids, de préférence, de 70 à 95% en poids,
par rapport au poids total du composant (B), d'une résine de mélamine dispersée ou dissoute dans un milieu aqueux ou d'un mélange résine de mélamine/résine d'urée dispersé ou dissous dans un milieu aqueux, et dont les composants (A) et (B) sont mélangés, avant l'application, dans un rapport tel que, pour une partie en poids de résine de polyacrylate autoréticulante, il revienne 0,35 à 0,75, de préférence, 0,4 à 0,6, partie en poids de résine de mélamine ou 0,3 à 1,5, de préférence, 0,8 à 1,2, partie en poids de mélange résine de mélamine/résine d'urée.

2. Procédé selon la revendication 1, caractérisé en ce que le catalyseur de durcissement potentiel se compose d'un sel obtenu à partir de l'amino-2 éthyl-2 propanediol-1,3 et/ou de l'amino-2-méthyl-2-propanol et d'un acide, de préférence l'acide paratoluènesulfonique.

3. Procédé selon la revendication 1 ou 2, caractérisé en ce que les groupes amide d'acide permettant l'autoréticulation du polyacrylate correspondent à la formule structurale générale -CO-NH-CH₂O-R³, où R³ signifie un atome d'hydrogène ou un reste hydrocarboné renfermant de 1 à 10 atomes de carbone, de préférence, méthyl, éthyl (iso)propyle ou (iso)butyle.

4. Procédé selon l'une des revendications 1 à 3, caractérisé en ce que le polyacrylate autoréticulant renferme, en dehors des groupes -CO-N(R¹)-CH(R²)-O-R³- également encore des groupes carboxyle, la teneur en groupes carboxyle pouvant être tout au plus suffisamment élevée pour que le polyacrylate ne se dissolve pas à un pH de 2 à 10.
